# EUROPÄISCHE PATENTANMELDUNG

(11) **EP 4 631 769 A1**
(43) Veröffentlichungstag der Anmeldung: **15.10.2025**
(21) Anmeldenummer: 25169787.6
(22) Anmeldetag: 10.04.2025
(51) Int. Cl.: B60L 3/04, B60L 3/12, B60L 53/16, B60L 53/18, B60L 53/31, B60L 53/62

(54) **VERFAHREN ZUM BETREIBEN EINER ELEKTRISCHEN LEISTUNGSVERSORGUNGSVORRICHTUNG, ABSCHALTSTEUERVORRICHTUNG UND LEISTUNGSVERSORGUNGSVORRICHTUNG**

(30) Priorität: 11.04.2024 DE 102024110210
(71) Anmelder: ads-tec Energy GmbH, 72622 Nürtingen (DE)
(72) Erfinder: DREHER, Holger, 71088 Holzgerlingen (DE); OCHS, Holger, 71159 Mötzingen (DE); NEUMANN, Angelika, 76137 Karlsruhe (DE); ZIEGLER, Daniel, 72762 Reutlingen (DE)
(74) Vertreter: Gleiss Große Schrell und Partner mbB

(57) **Zusammenfassung**

Die Erfindung betrifft ein Verfahren zum Betreiben einer elektrischen Leistungsversorgungsvorrichtung (1) zum uni- oder bidirektionalen Laden einer Energiespeichervorrichtung (2), wobei
- während eines Ladevorgangs ein zeitlicher Ladeparametergradient eines für den Ladevorgang charakteristischen Ladeparameters erfasst wird, wobei,
- wenn anhand des erfassten Ladeparametergradienten auf eine Störung des Ladevorgangs geschlossen wird, eine Notfallmaßnahme durchgeführt wird, um die Leistungsversorgungsvorrichtung (1) und/oder die Energiespeichervorrichtung (2) vor einer Beschädigung zu schützen.

Außerdem betrifft die Erfindung eine Abschaltsteuervorrichtung (5) zur Durchführung eines solchen Verfahrens und eine Leistungsversorgungsvorrichtung (1) mit einer solchen Abschaltsteuervorrichtung (5).

## Beschreibung

Die Erfindung betrifft ein Verfahren zum Betreiben einer elektrischen Leistungsversorgungsvorrichtung zum uni- oder bidirektionalen Laden insbesondere einer Energiespeichervorrichtung, eine Abschaltsteuervorrichtung und eine Leistungsversorgungsvorrichtung.

Beim Laden einer Energiespeichervorrichtung, insbesondere eines Elektrofahrzeugs, mittels einer Leistungsversorgungsvorrichtung ist es notwendig, zu gewährleisten, dass eine maximale Ladestromstärke und/oder eine maximale Ladespannung nicht überschritten wird, um eine Beschädigung der Energiespeichervorrichtung und/oder der Leistungsversorgungsvorrichtung zu verhindern. Insbesondere ist zu gewährleisten, dass bei einer Fehlfunktion der Leistungsversorgungsvorrichtung und/oder der elektrischen Energiespeichervorrichtung eine elektrische Verbindung, insbesondere ein Leistungsstromkreis, unterbrochen wird.

Es ist bekannt, dass Elektrofahrzeuge eine Sicherung aufweisen, die im Falle einer Fehlfunktion der Leistungsversorgungsvorrichtung den Leistungsstromkreis unterbrechen. Kommt es beispielsweise während eines bidirektionalen Ladevorgangs - wenn das Elektrofahrzeug elektrische Energie an die Leistungsversorgungsvorrichtung überträgt - zu einem Kurzschluss in der Leistungsversorgungsvorrichtung, überträgt das Elektrofahrzeug Energie mit einer derart hohen Leistung an die Leistungsversorgungsvorrichtung, dass die Sicherung des Elektrofahrzeugs auslöst. Nachteilig an diesen Sicherungen ist, dass diese beim Öffnen unter einer hohen Stromlast bereits nach wenigen Schaltvorgängen ausgetauscht werden müssen. Solche Sicherungen können ferner in eine Batterie des Elektrofahrzeugs integriert sein. Das Elektrofahrzeug ist nach dem Auslösen der Sicherung nicht mehr funktionsfähig Zur Wiederherstellung der Funktionsfähigkeit des Elektrofahrzeugs muss das Elektrofahrzeug abgeschleppt und die Sicherung ausgetauscht und/oder manuell aktiviert werden. Alternativ muss nach dem Auslösen der Sicherung die gesamte Batterie ausgetauscht werden.

Weiterhin ist bekannt, dass die Leistungsversorgungsvorrichtungen Schmelzsicherungen aufweisen können. Die Schmelzsicherungen sind eingerichtet, um den Leistungsstromkreis bei einer Fehlfunktion der Leistungsversorgungsvorrichtung zu unterbrechen. Nachteilig daran ist, dass eine Reaktionszeit dieser Sicherungen so lange ist, dass sowohl die Sicherung der Leistungsversorgungsvorrichtung als auch die Sicherung des Elektrofahrzeugs ausgelöst wird. Weiterhin ist es nicht möglich, den Leistungsstromkreis bei einer Fehlfunktion der Leistungsversorgungsvorrichtung bereits vor dem Auslösen der Sicherung von Elektrofahrzeugen zu unterbrechen und somit eine Funktionsfähigkeit des Elektrofahrzeugs zu erhalten. Problematisch ist außerdem, dass an einer solchen Leistungsversorgungsvorrichtung verschiedenste Elektrofahrzeuge geladen werden können, sodass der Leistungsversorgungsvorrichtung eine Auslösecharakteristik der Sicherung des Elektrofahrzeugs nicht bekannt ist und diese somit auch nicht geschützt werden kann.

Der Erfindung liegt daher die Aufgabe zugrunde, ein Verfahren zum Betreiben einer elektrischen Leistungsversorgungsvorrichtung, eine Abschaltsteuervorrichtung und eine Leistungsversorgungsvorrichtung zu schaffen, wobei die genannten Nachteile zumindest reduziert sind, vorzugsweise vermieden werden.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Verfahren zum Betreiben einer elektrischen Leistungsversorgungsvorrichtung, insbesondere Ladestation, zum uni- oder bidirektionalen Laden einer Energiespeichervorrichtung, insbesondere eines Elektrofahrzeugs, insbesondere eines Batteriespeichers eines Elektrofahrzeugs, geschaffen wird. In dem Verfahren wird während eines Ladevorgangs ein zeitlicher Ladeparametergradient eines für den Ladevorgang charakteristischen Ladeparameters erfasst. Wenn anhand des erfassten Ladeparametergradienten auf eine Störung des Ladevorgangs geschlossen wird, wird eine Notfallmaßnahme durchgeführt, um die Leistungsversorgungsvorrichtung und/oder die Energiespeichervorrichtung vor einer Beschädigung zu schützen.

Vorteilhafterweise kann mittels des Ladeparametergradienten zeitlich früher auf eine Störung des Ladevorgangs geschlossen werden als mittels des zugeordneten Ladeparameters selbst. Insbesondere liegt eine Reaktionszeit des Verfahrens im Mikrosekunden-Bereich. Insbesondere ist es nicht notwendig, dass ein Ladeparameter selbst einen Ladeparameterschwellenwert erreicht, bevor auf eine Störung des Ladevorgangs geschlossen werden kann. Es ist bereits ausreichend, wenn eine Ladeparameteränderungsgeschwindigkeit - der Ladeparametergradient - außerhalb eines vorbestimmten Bereichs oder über einem Schwellenwert liegt, um eine Störung des Ladevorgangs zu erkennen. Damit ist es vorteilhafterweise nicht notwendig, eine Auslösecharakteristik und/oder einen Nennstrom einer Sicherung des Elektrofahrzeugs zu kennen. Insbesondere sind keine festen Abschaltschwellen der Leistungsversorgungsvorrichtung notwendig. Mittels des Verfahrens können somit auch Energiespeichervorrichtungen vor einer Beschädigung geschützt werden, die Sicherungen mit unterschiedlichen Auslösecharakteristiken und/oder Nennströmen aufweisen, ohne dass diese Auslösecharakteristiken und/oder Nennströme der Leistungsversorgungsvorrichtung bekannt sind. Vorteilhafterweise ist es damit möglich, den Leistungsstromkreis der elektrischen Leistungsversorgungsvorrichtung bei einer Fehlfunktion derselben zu unterbrechen, bevor eine Energiespeichervorrichtung die Fehlfunktion registriert und insbesondere eine Sicherung der Energiespeichervorrichtung ausgelöst wird.

Unter dem Begriff "Laden" wird im Kontext der vorliegenden technischen Lehre neben einem Aufladen insbesondere auch ein Entladen verstanden. Bei einem Aufladevorgang wird insbesondere die Energiespeichervorrichtung von der Leistungsversorgungsvorrichtung aufgeladen. Bei einem Entladevorgang wird insbesondere die Energiespeichervorrichtung entladen, wobei die Energie an die Leistungsversorgungsvorrichtung übertragen wird. Die übertragene Energie kann an ein Stromnetz, mit dem die Leistungsversorgungsvorrichtung verbunden ist, weitergegeben werden, um dieses zu stabilisieren oder temporär zu stützen. Die Leistungsversorgungsvorrichtung dient hier somit als Zugangspunkt zum Stromnetz. Alternativ oder zusätzlich kann ein Vorrichtungsenergiespeicher der Leistungsversorgungsvorrichtung mit der übertragenen Energie aufgeladen werden. Ein unidirektionales Laden umfasst typischerweise nur Aufladevorgänge, während ein bidirektionales Laden sowohl Auflade- als auch Entladevorgänge umfasst. Unter einem Ladeparameter wird im Kontext der vorliegenden technischen Lehre somit insbesondere ein Aufladeparameter und ein Entladeparameter verstanden.

Im Kontext der vorliegenden technischen Lehre ist ein positiver Ladestrom eine Energieübertragung von der Leistungsversorgungsvorrichtung zu der Energiespeichervorrichtung - also ein Aufladen. Weiterhin ist im Kontext der vorliegenden technischen Lehre ein negativer Ladestrom eine Energieübertragung von der Energiespeichervorrichtung zu der Leistungsversorgungsvorrichtung - also ein Entladen.

In einer Ausführungsform wird in dem Verfahren ein bidirektionaler Ladestrom überwacht. Damit ist vorteilhafterweise auch eine Überwachung eines Ladestroms von der Energiespeichervorrichtung zu der elektrischen Leistungsversorgungsvorrichtung möglich.. Vorteilhafterweise kann auch im Falle einer Fehlfunktion der Leistungsversorgungsvorrichtung beim bidirektionalen Laden vermieden werden, dass eine Sicherung der Energiespeichervorrichtung auslöst und beispielsweise ein Elektrofahrzeug nicht mehr funktionstüchtig ist. Vielmehr wird vermieden, dass die Sicherung des Elektrofahrzeugs überhaupt einem Betrieb mit von einem normalen Betrieb abweichenden Ladeparametern ausgesetzt wird. Besonders vorteilhaft erweist sich dies bei Batterien, die eine integrierte Sicherung aufweisen. Diese müssen, aufgrund der nicht ausgelösten Sicherung, nicht mehr kostenintensiv ausgetauscht werden. Vorteilhafterweise kann insgesamt ein Abschleppen und Instandsetzen des Elektrofahrzeugs vermieden werden.

Als Leistungsversorgungsvorrichtung, insbesondere Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik des Leistungsstromkreises befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Leistungsversorgungsvorrichtung, insbesondere die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet, weist also einen Vorrichtungsenergiespeicher auf.

Gemäß einer Weiterbildung der Erfindung ist vorgesehen, dass der Ladeparametergradient direkt erfasst wird, wobei der Ladeparametergradient mit einem vorbestimmten Gradienten-Schwellenwert verglichen wird. Auf eine Störung des Ladevorgangs wird geschlossen, wenn der erfasste Ladeparametergradient den vorbestimmten Gradienten-Schwellenwert überschreitet. Alternativ ist vorgesehen, dass der Ladeparametergradient indirekt erfasst wird, indem ein für den Ladeparametergradient charakteristischer Messparameter gemessen wird, wobei der Messparameter mit einem vorbestimmten Messparameter-Schwellenwert verglichen wird, wobei auf eine Störung des Ladevorgangs geschlossen wird, wenn der Messparameter den vorbestimmten Messparameter-Schwellenwert überschreitet.

In einer Ausführungsform wird der Ladeparametergradient und/oder der Messparameter vorzeichenfrei erfasst, insbesondere als Betrag, Betragsquadrat oder Quadratwurzel des Betragsquadrats. Entsprechend ist bevorzugt der Gradienten-Schwellenwert und/oder der Messparameter-Schwellenwert eine vorzeichenfreie Größe, insbesondere ein Betrag. Dass der Ladeparametergradient oder der charakteristische Messparameter den zugeordneten Schwellenwert überschreitet, bedeutet somit insbesondere, dass er betragsmäßig größer - damit insbesondere "steiler" - wird als der Schwellenwert, unabhängig vom Vorzeichen des Ladeparametergradient oder des charakteristischen Messparameters.

Dass der Ladeparametergradient direkt erfasst wird, bedeutet im Kontext der vorliegenden technischen Lehre insbesondere, dass eine physikalische Größe des Ladeparametergradienten direkt erfasst und zeitlich abgeleitet wird. Insbesondere wird eine Ladeleistung, eine Ladestromstärke oder eine Ladespannung direkt erfasst.

Dass der Ladeparametergradient indirekt erfasst wird, bedeutet im Kontext der vorliegenden technischen Lehre insbesondere, dass eine von dem Ladeparametergradienten abhängige physikalische Größe direkt erfasst wird, nämlich der für den Ladeparametergradient charakteristische Messparameter. Insbesondere wird ein zeitlicher Gradient der Ladeleistung, eine Ladestromstärke oder eine Ladespannung indirekt - indem der für den Ladeparametergradient charakteristischer Messparameter gemessen wird - erfasst.

Gemäß einer Weiterbildung der Erfindung ist vorgesehen, dass als Notfallmaßnahme ein Leistungsstromkreis einer Leistungselektronik, insbesondere der Leistungsversorgungsvorrichtung oder der Energiespeichervorrichtung, unterbrochen wird, insbesondere so, dass der Ladevorgang unterbrochen wird.

In einer Ausführungsform wird der Leistungsstromkreis mittels einer Abschaltanordnung unterbrochen. Die Abschaltanordnung ist insbesondere eingerichtet, um den Leistungsstromkreis zu unterbrechen.

Gemäß einer Weiterbildung der Erfindung ist vorgesehen, dass als der Ladeparameter mindestens eine Ladestromgröße verwendet wird, die ausgewählt ist aus einer Gruppe, bestehend aus: Einer Ladeleistung, einer Ladestromstärke, einer Ladespannung und einer Kombination aus mindestens zwei der genannten Ladestromgrößen.

In einer Ausführungsform - wenn der Ladeparametergradient indirekt erfasst wird - ist vorgesehen, dass als der Messparameter eine aufgrund einer Induktivität, insbesondere von elektronischen Bauteilen der Leistungsversorgungsvorrichtung, insbesondere einer Abschaltsteuervorrichtung der Leistungsversorgungsvorrichtung, über einer - von dem Ladestrom oder einem von dem Ladestrom abhängigen Teilstrom - durchflossenen Messstrecke abfallende Spannung erfasst wird. Die über der die Induktivität *L* aufweisenden Messstrecke abfallende Spannung *u(t)* ist unmittelbar abhängig von - insbesondere nach der Gleichung *u(t) = L-dI(t)*/*dt* proportional zu - dem zeitlichen Gradienten des Ladestroms oder Teilstroms *I(t)* und damit von dem Ladeparametergradient. In einer Ausführungsform wird als der Messparameter eine über einer von dem Ladestrom oder Teilstrom durchflossenen Spule abfallende Spannung erfasst. Alternativ weist die Messstrecke die Induktivität als eine parasitäre Induktivität auf. "Parasitär" bedeutet in diesem Zusammenhang insbesondere, dass ein Leitungsabschnitt oder mehrere unbestimmte, nicht klar umgrenzte Bauteile und/oder Leitungsabschnitte der Leistungsversorgungsvorrichtung und/oder der Energiespeichervorrichtung für die Induktivität ursächlich sind.

Gemäß einer Weiterbildung der Erfindung ist vorgesehen, dass mindestens ein Schwellenwert, ausgewählt aus dem Gradienten-Schwellenwert und dem Messparameter-Schwellenwert, abhängig von einem Grenz-Ladeparameter gesetzt wird, der ausgewählt ist aus einer Gruppe, bestehend aus: Einer zulässigen Leistungsgradientenobergrenze, einer zulässigen Leistungsobergrenze, einer zulässigen Stromstärkegradientenobergrenze, einer zulässigen Stromstärkeobergrenze, einer zulässigen Spannungsgradientenobergrenze, einer zulässigen Spannungsobergrenze und einer Kombination aus mindestens zwei der genannten Grenzwerte.

In einer Ausführungsform wird der Grenz-Ladeparameter erfasst, indem während eines Ladevorgangs Daten einer Datenübertragung zwischen der Leistungsversorgungsvorrichtung und der Energiespeichervorrichtung empfangen werden. Die Daten enthalten zumindest den einen für den Ladevorgang charakteristischen Grenz-Ladeparameter. Abhängig von dem zumindest einen Grenz-Ladeparameter wird der Gradienten-Schwellenwert der Leistungsversorgungsvorrichtung für den Ladeparametergradient gesetzt. Wenn der Ladeparametergradient den Gradienten-Schwellenwert überschreitet, wird eine Notfallmaßnahme durchgeführt, insbesondere um die Leistungsversorgungsvorrichtung und/oder die Energiespeichervorrichtung vor einer Beschädigung zu schützen.

In einer Ausführungsform ist vorgesehen, dass der Gradienten-Schwellenwert gesetzt wird, indem abhängig von dem zumindest einen Grenz-Ladeparameter ein Soll-Gradienten-Schwellenwert der Leistungsversorgungsvorrichtung für den Ladeparameter bestimmt wird. Es wird geprüft, ob ein aktueller Ist-Wert des Gradienten-Schwellenwerts der Leistungsversorgungsvorrichtung gleich einem Soll-Wert des Soll-Gradienten-Schwellenwerts ist, insbesondere den gleichen Wert aufweist. Wenn der aktuelle Ist-Wert nicht gleich dem Soll-Wert ist, insbesondere nicht den gleichen Wert aufweist, wird der Gradienten-Schwellenwert angepasst, sodass ein neuer Ist-Wert des Gradienten-Schwellenwerts gleich dem Soll-Wert ist, insbesondere den gleichen Wert aufweist.

In einer Ausführungsform werden die Daten einer Datenübertragung, die eine elektrische Leitung im Kleinspannungsnetz (eng: Powerline Communication (PLC)) und/oder ein serielles Bussystem (eng: Controller Area Network (CAN)) nutzt, erfasst und/oder empfangen. Insbesondere ist die Erfassungsvorrichtung eingerichtet, um Daten einer Datenübertragung, die eine elektrische Leitung im Kleinspannungsnetz (eng: Powerline Communication (PLC)) nutzt, und/oder Daten einer Datenübertragung, die ein serielles Bussystem (eng: Controller Area Network (CAN)) nutzt, zu empfangen. Insbesondere verläuft die elektrische Leitung von der Leistungsversorgungsvorrichtung zu der Energiespeichervorrichtung, insbesondere innerhalb eines Ladekabels. Dabei ist die elektrische Leitung insbesondere eine von dem Leistungsstromkreis verschiedene Leitung innerhalb des Ladekabels.

Die Daten können direkt oder indirekt erfasst werden: Die Daten können direkt erfasst werden, indem eine Erfassungsvorrichtung eingerichtet ist, um mittels einer Kommunikationsschnittstelle, vorzugsweise einem seriellen Bussystem oder einer Netzwerkschnittstelle, mit der Leistungsversorgungsvorrichtung zu kommunizieren. Vorzugsweise kommuniziert die Erfassungsvorrichtung mit der Steuervorrichtung und/oder der Leistungselektronik direkt. Die Daten können indirekt erfasst werden, indem die Erfassungsvorrichtung eingerichtet ist, um die Datenübertragung auf einem Datenübertragungsweg zu erfassen, insbesondere ohne hierzu direkt mit der Steuervorrichtung zu kommunizieren. Dabei kann der Datenübertragungsweg geöffnet, insbesondere aufgetrennt werden, wobei die Erfassungsvorrichtung dazwischengesetzt und der Datenübertragungsweg wieder geschlossen wird. Alternativ ist es möglich, dass die Erfassungsvorrichtung die Datenübertragung ohne eine elektrische Verbindung zum Datenübertragungsweg selbst erfasst - also quasi die Datenübertragung insbesondere elektrisch kontaktlos, insbesondere galvanisch entkoppelt, insbesondere induktiv, abhört. Dies erfolgt vorzugsweise an der Leitung oder dem Ladekabel.

Vorteilhafterweise kann der mindestens eine Gradienten-Schwellenwert flexibel an verschiedene Energiespeichervorrichtungen angepasst werden. So kann der Gradienten-Schwellenwert beispielsweise bei einem elektrischen Kleinfahrzeug mit einer maximalen Ladestromstärke von 125 A - bei einer Ladespannung von 400 V ergibt dies eine Ladeleistung von 50 kW - niedriger - also weniger "steil" - gesetzt werden, als bei einem elektrischen Nutzfahrzeug mit einer maximalen Ladestromstärke von 625 A - bei einer Ladespannung von 400 V ergibt dies eine Ladeleistung von 250 kW - bei dem der Gradienten-Schwellenwert höher - also "steiler" - gesetzt wird. Somit können verschiedene Elektrofahrzeuge vor einer Beschädigung geschützt werden.

In einer bevorzugten Ausführungsform wird der Gradienten-Schwellenwert abhängig von einer zulässige Stromstärkegradientenobergrenze gesetzt. In einer bevorzugten Ausführungsform wird der Messparameter-Schwellenwerts abhängig von einer zulässigen Spannungsobergrenze gesetzt.

In einer Ausführungsform wird mindestens ein Schwellenwert, ausgewählt aus dem Gradienten-Schwellenwert und dem Messparameter-Schwellenwert, abhängig von einer zeitlichen Schwankung des Ladeparameters und/oder des Ladeparametergradienten und/oder des Messparameters gesetzt.

In einer Ausführungsform beträgt der Stromstärkegradient bei einer mit einem störungsfreien Ladevorgang betriebenen Leistungsversorgungsvorrichtung von 20 A/s bis 100 A/s. Bei einer mit einer kurzgeschlossenen Energiespeichervorrichtung betriebenen Leistungsversorgungsvorrichtung kann der Stromstärkegradient dagegen größer 1,5 A/µs betragen. Bei bisher durchgeführten Messungen wurde bei einem Kurzschluss ein Stromstärkegradient von bis zu 340 A/ µs gemessen. Ein Rippelstrom des Ladestroms kann einen Rippelstromgradienten von bis zu 20 A/µs aufweisen. Nach einer Glättung mittels einer Kapazität, insbesondere mittels eines Kondensators, kann der Rippelstromgradient des Rippelstroms bis zu 1 A/µs betragen. Der maximal nach der Norm IEC61851-23 in ihrer an dem für den Zeitrang der vorliegenden Anmeldung maßgeblichen Tag gültigen Fassung zulässige Rippelstromgradient kann 2,7 A/µs, insbesondere genormt auf eine Ladestromstärke von 9 A mit einer Frequenz des Rippelstroms von bis zu 150 kHz betragen. Der Rippelstrom ist insbesondere ein Wechselstrom beliebiger Frequenz und Kurvenform, der einem Gleichstrom, insbesondere dem Ladestrom, überlagert ist. Insbesondere ist der Ladestrom mit einem Rippelstrom überlagert, der eine Frequenz von 80 kHz bis 120 kHz, insbesondere 100 kHz aufweist.

In einer bevorzugten Ausführungsform wird der Gradienten-Schwellenwert abhängig von einer zulässigen Stromstärkegradientenobergrenze eines Ladestroms des Ladevorgangs gesetzt, wobei die Stromstärkegradientenobergrenze bis 100 A/s, insbesondere 100 A/s, beträgt. Insbesondere ist bei dieser Ausführungsform der Rippelstrom geglättet, sodass der Rippelstromgradient bis zu 1 A/µs beträgt. Vorteilhafterweise kann so besonders schnell auf eine Störung des Ladevorgangs geschlossen und die Notfallmaßnahme durchgeführt, insbesondere der Leistungsstromkreis unterbrochen werden.

In wieder einer anderen bevorzugten Ausführungsform wird der Gradienten-Schwellenwert abhängig von einer zulässigen Stromstärkegradientenobergrenze des Rippelstroms und einer zulässigen Stromstärkegradientenobergrenze des Ladestroms gesetzt. Insbesondere wird der Gradienten-Schwellenwert derart gesetzt, dass er in einem Intervall zwischen der zulässigen Stromstärkegradientenobergrenze des Rippelstroms und der Stromstärkegradientenobergrenze des Ladestroms liegt. In einer Ausgestaltung wird der Gradienten-Schwellenwert auf einen Wert zwischen 1 A/µs und 1,5 A/µs, insbesondere 1,3 A/µs gesetzt.

Gemäß einer Weiterbildung der Erfindung ist vorgesehen, dass der Ladeparametergradient und/oder der Messparameter an einer Leitung, einem Ladekabel, das die Leistungsversorgungsvorrichtung mit der Energiespeichervorrichtung verbindet, einer Leistungselektronik, einer elektrischen Schnittstelle und/oder an einer Steuervorrichtung der Leistungsversorgungsvorrichtung erfasst wird.

Vorteilhafterweise können der Ladeparametergradient und/oder der Messparameter unkompliziert erfasst werden. Es ist möglich, dass der Ladeparametergradient und/oder der Messparameter jeweils an verschiedenen Stellen, insbesondere an mindestens zwei Stellen, der Leistungsversorgungsvorrichtung redundant erfasst werden. Insbesondere weist eine Stelle zumindest zwei Messpunkte auf. Dabei können die Messpunkte insbesondere die Messstrecke definieren, wobei als der Messparameter die Spannung zwischen den Messpunkten gemessen wird.

In einer Ausführungsform wird das Verfahren wiederholt, insbesondere nach einem vorbestimmten Zeitintervall, insbesondere zyklisch, durchgeführt. Insbesondere wird das Verfahren mit einer Frequenz von 10 kHz bis 50 kHz durchgeführt.

Die Aufgabe wird auch gelöst, indem eine Abschaltsteuervorrichtung für eine Leistungsversorgungsvorrichtung zum uni- oder bidirektionalen Laden einer Energiespeichervorrichtung, insbesondere eines Elektrofahrzeugs, insbesondere eines Batteriespeichers eines Elektrofahrzeugs, geschaffen wird. Die Abschaltsteuervorrichtung ist eingerichtet, um ein erfindungsgemäßes Verfahren oder ein Verfahren gemäß einer oder mehreren der zuvor beschriebenen Ausführungsformen durchzuführen. In Zusammenhang mit der Abschaltsteuervorrichtung ergeben sich insbesondere die Vorteile, die bereits in Zusammenhang mit dem Verfahren erläutert wurden.

Gemäß einer Weiterbildung der Erfindung ist vorgesehen, dass die Abschaltsteuervorrichtung eingerichtet ist, um mit einem Leistungsstromkreis der Leistungsversorgungsvorrichtung wirkverbunden zu werden und um den Leistungsstromkreis zu unterbrechen.

In einer Ausführungsform ist die Abschaltsteuervorrichtung eingerichtet, um mit einer Abschaltanordnung der Leistungsversorgungsvorrichtung steuerungswirkverbunden zu werden.

Gemäß einer Weiterbildung der Erfindung ist vorgesehen, dass die Abschaltsteuervorrichtung durch eine Steuervorrichtung der Leistungsversorgungsvorrichtung gebildet ist.

Insbesondere ist die Steuervorrichtung eingerichtet, um mit der Abschaltanordnung steuerungswirkverbunden zu werden.

In einer Ausführungsform ist die Abschaltsteuervorrichtung in eine Steuervorrichtung der Leistungsversorgungsvorrichtung integriert. In einer anderen Ausführungsform ist die Abschaltsteuervorrichtung als Steuervorrichtung der Leistungsversorgungsvorrichtung ausgebildet.

Die Aufgabe wird auch gelöst, indem eine Leistungsversorgungsvorrichtung zum uni- oder bidirektionalen Laden einer Energiespeichervorrichtung, insbesondere eines Elektrofahrzeugs, insbesondere eines Batteriespeichers eines Elektrofahrzeugs, geschaffen wird. Die Leistungsversorgungsvorrichtung umfasst eine Leistungselektronik, eine erfindungsgemäße Abschaltsteuervorrichtung oder eine Abschaltsteuervorrichtung gemäß einer oder mehreren der zuvor beschriebenen Ausführungsformen und eine elektrische Schnittstelle. Die Leistungselektronik ist eingerichtet, um einen Leistungsstromkreis zum Laden der Energiespeichervorrichtung wahlweise zu schließen oder zu öffnen. Die elektrische Schnittstelle ist eingerichtet, um mit der Energiespeichervorrichtung zum Laden der Energiespeichervorrichtung verbunden zu werden.

In einer Ausführungsform weist die Leistungsversorgungsvorrichtung eine Abschaltanordnung auf. Insbesondere ist die Abschaltsteuervorrichtung mit der Abschaltanordnung steuerungswirkverbunden. Insbesondere ist die Abschaltanordnung eingerichtet, um ein Unterbrechungssignal der Abschaltsteuervorrichtung zu empfangen und daraufhin den Leistungsstromkreis zu unterbrechen.

Unter einem Unterbrechungssignal wird im Kontext der vorliegenden technischen Lehre insbesondere ein elektrisches Signal verstanden. Das elektrische Signal kann eine Steuerspannung an einem Gate-Anschluss eines Leistungshalbleiter-Bauteils sein.

Gemäß einer Weiterbildung der Erfindung ist vorgesehen, dass die Abschaltsteuervorrichtung in eine Steuervorrichtung der Leistungsversorgungsvorrichtung integriert ist oder als Steuervorrichtung der Leistungsversorgungsvorrichtung ausgebildet ist.

Insbesondere ist die Steuervorrichtung mit der Abschaltanordnung steuerungswirkverbunden. Insbesondere ist die Abschaltanordnung eingerichtet, um das Unterbrechungssignal der Steuervorrichtung zu empfangen und daraufhin den Leistungsstromkreis zu unterbrechen.

In einer Ausführungsform weist die Abschaltanordnung ein erstes ansteuerbares Leistungshalbleiter-Bauteil und ein zweites ansteuerbares Leistungshalbleiter-Bauteil. Das erste Leistungshalbleiter-Bauteil und das zweite Leistungshalbleiter-Bauteil sind antiseriell angeordnet. Das erste Leistungshalbleiter-Bauteil und das zweite Leistungshalbleiter-Bauteil sind eingerichtet, um in einem eingeschalteten Zustand den Ladestrom der Leistungsversorgungsvorrichtung zu leiten. Die Abschaltsteuervorrichtung ist mit dem ersten Leistungshalbleiter-Bauteil und dem zweiten Leistungshalbleiter-Bauteil wirkverbunden und eingerichtet zu deren jeweiliger Ansteuerung. Weiter ist die Abschaltsteuervorrichtung eingerichtet, um den Wert des mindestens einen für den Ladestrom charakteristischen Ladeparameters zu erfassen, und in Abhängigkeit von dem erfassten Wert das erste Leistungshalbleiter-Bauteil und/oder das zweite Leistungshalbleiter-Bauteil abzuschalten und dadurch den Ladestrom, insbesondere den Leistungsstromkreis zu unterbrechen.

Optional weist die Abschaltanordnung eine Diode auf, wobei die Diode, das erste Leistungshalbleiter-Bauteil und das zweite Leistungshalbleiter-Bauteil als T-Schaltung angeordnet sind.

Im Kontext der vorliegenden technischen Lehre sind bei einer T-Schaltung insbesondere drei elektrische Bauteile an einem einzigen Verbindungspunkt elektrisch miteinander verbunden. Dabei sind ein erster Anschluss des ersten Bauteils, insbesondere das erste Leistungshalbleiter-Bauteil, und ein erster Anschluss des zweiten Bauteils, insbesondere das zweite Leistungshalbleiter-Bauteil, über den Verbindungspunkt elektrisch miteinander verbunden. Zusätzlich sind der erste Anschluss des ersten Bauteils und ein erster Anschluss des dritten Bauteils, insbesondere die Diode, über den Verbindungspunkt elektrisch miteinander verbunden. Zusätzlich sind der erste Anschluss des zweiten Bauteils und der erste Anschluss des dritten Bauteils über den Verbindungspunkt elektrisch miteinander verbunden. Weiterhin ist ein zweiter Anschluss des ersten Bauteils und ein zweiter Anschluss des dritten Bauteils mit einer Spannungs- oder Stromquelle, insbesondere der Leistungsversorgungsvorrichtung oder der Energiespeichervorrichtung, verbunden oder verbindbar. Darüber hinaus sind ein zweiter Anschluss des zweiten Bauteils und der zweite Anschluss des dritten Bauteils mit einem Verbraucher, insbesondere der Energiespeichervorrichtung, verbunden oder verbindbar, wobei die Spannungs- oder Stromquelle und der Verbraucher verschieden ausgebildet sind.

Insbesondere übernimmt die Diode nach der Unterbrechung den Ladestrom, der dann langsam über die Diode abgebaut wird. Vorteilhafterweise ist es mittels der Diode möglich, Energie aus einer Leitungsinduktivität des Ladestrom abzuführen. Dabei weist der Ladestrom bei der Leitung über die Diode eine hohe Stromstärke und eine geringe Spannung von weniger als 2 V auf. Weiterhin verringert sich ebenfalls eine Abschaltdauer.

In einer Ausgestaltung ist die Abschaltanordnung derart eingerichtet, dass ein positiver Ladestrom von dem zweiten Leistungshalbleiter-Bauteil immer geleitet wird. Zusätzlich ist die Abschaltanordnung derart eingerichtet, dass ein positiver Ladestrom von dem ersten Leistungshalbleiter-Bauteil in Abhängigkeit von dem erfassten Wert des mindestens einen charakteristischen Ladeparameters unterbrochen wird. Weiterhin ist die Abschaltanordnung derart eingerichtet, dass ein negativer Ladestrom von dem ersten Leistungshalbleiter-Bauteil immer geleitet wird. Zusätzlich ist die Abschaltanordnung derart eingerichtet, dass ein negativer Ladestrom von dem zweiten Leistungshalbleiter-Bauteil in Abhängigkeit von dem erfassten Wert des mindestens einen charakteristischen Ladeparameters unterbrochen wird. Dies wird vorliegend auch als antiparallele Anordnung, insbesondere als "antiparallel" bezeichnet.

Im Kontext der vorliegenden technischen Lehre weist ein Leistungshalbleiter-Bauteil mindestens einen Pluspol und mindestens einen Minuspol auf. Vorzugsweise weist ein Leistungshalbleiter-Bauteil zusätzlich einen Steueranschluss auf, wobei die Abschaltsteuervorrichtung mit dem Steueranschluss elektrisch verbunden ist.

Besonders bevorzugt ist das erste Leistungshalbleiter-Bauteil und/oder das zweite Leistungshalbleiter-Bauteil unidirektional sperrend ausgebildet.

In einer Ausführungsform ist vorgesehen, dass die Abschaltsteuervorrichtung eingerichtet ist, um den erfassten Wert mit einem Schwellenwert, ausgewählt aus dem Gradienten-Schwellenwert und dem Messparameter-Schwellenwert, zu vergleichen, und in Abhängigkeit von dem Vergleich das erste Leistungshalbleiter-Bauteil und/oder das zweite Leistungshalbleiter-Bauteil abzuschalten und dadurch den Ladestrom zu unterbrechen. Vorteilhafterweise ist es damit möglich, in einfacher und schneller Weise über eine Abschaltung des ersten Leistungshalbleiter-Bauteils und/oder des zweiten Leistungshalbleiter-Bauteils zu entscheiden.

In einer Ausgestaltung ist die Abschaltsteuervorrichtung eingerichtet ist, um eine Differenz aus dem erfassten Wert und dem Schwellenwert zu bestimmen, und in Abhängigkeit von der Differenz das erste Leistungshalbleiter-Bauteil und/oder das zweite Leistungshalbleiter-Bauteil abzuschalten und dadurch den Ladestrom zu unterbrechen.

In einer Ausführungsform ist vorgesehen, dass das erste Leistungshalbleiter-Bauteil einen ersten Halbleiter-Schalter und eine erste Bauteil-Diode aufweist, wobei der erste Halbleiter-Schalter und die erste Bauteil-Diode antiparallel angeordnet sind. Zusätzlich weist das zweite Leistungshalbleiter-Bauteil einen zweiten Halbleiter-Schalter und eine zweite Bauteil-Diode auf, wobei der zweite Halbleiter-Schalter und die zweite Bauteil-Diode antiparallel angeordnet sind. Damit wird erreicht, dass ein elektrischer Strom, welcher von dem Pluspol des Leistungshalbleiter-Bauteils zu dem Minuspol des Leistungshalbleiter-Bauteils fließt, durch den Halbleiter-Schalter geleitet wird, da die Bauteil-Diode in Sperrrichtung angeordnet ist. Weiterhin wird erreicht, dass ein elektrischer Strom, welcher von dem Minuspol des Leistungshalbleiter-Bauteils zu dem Pluspol des Leistungshalbleiter-Bauteils fließt, durch die Bauteil-Diode geleitet wird, da die Bauteil-Diode in Durchlassrichtung angeordnet ist. Darüber hinaus sind, aufgrund der anti seriellen Anordnung des ersten Leistungshalbleiter-Bauteils und des zweiten Leistungshalbleiter-Bauteils, der erste Halbleiter-Schalter und der zweite Halbleiter-Schalter ebenfalls antiseriell in der Abschalteinrichtung angeordnet. Vorteilhafterweise bilden damit der erste Halbleiter-Schalter und der zweite Halbleiter-Schalter einen bidirektionalen Halbleiter-Schalter. Weiterhin ist es mittels der Halbleiter-Schalter möglich, den Ladestrom mittels eines entsprechenden Gate-Signals schnell zu unterbrechen. Zusätzlich sind, aufgrund der anti seriellen Anordnung des ersten Leistungshalbleiter-Bauteils und des zweiten Leistungshalbleiter-Bauteils, die erste Bauteil-Diode und die zweite Bauteil-Diode ebenfalls antiseriell in der Abschaltanordnung angeordnet.

In einer Ausgestaltung ist der erste Halbleiter-Schalter und/oder der zweite Halbleiter-Schalter als Feldeffekttransistor ausgebildet, insbesondere als Metall-Oxid-Halbleiter-Feldeffekttransistor (MOSFET). Insbesondere weist der Metall-Oxid-Halbleiter-Feldeffekttransistor einen Siliziumkarbid-Werkstoff auf. Wird ein n-Kanal-Feldeffekttransistor verwendet, ist ein Drain-Anschluss des Feldeffekttransistors dem Pluspol des Leistungshalbleiter-Bauteils zugeordnet und ein Source-Anschluss des Feldeffekttransistors ist dem Minuspol des Leistungshalbleiter-Bauteils zugeordnet. Wird alternativ ein p-Kanal-Feldeffekttransistor verwendet, ist der Source-Anschluss des Feldeffekttransistors dem Pluspol des Leistungshalbleiter-Bauteils zugeordnet und der Drain-Anschluss des Feldeffekttransistors ist dem Minuspol des Leistungshalbleiter-Bauteils zugeordnet. Besonders bevorzugt ist die Abschaltsteuervorrichtung eingerichtet, um die Halbleiter-Flussspannung, insbesondere eine Gate-Source-Spannung des Feldeffekttransistors, zu erfassen und daraus eine Stromstärke und/oder eine Spannung als den mindestens einen Ladeparameter zu ermitteln.

In einer weiteren Ausgestaltung ist der erste Halbleiter-Schalter und/oder der zweite Halbleiter-Schalter als Bipolartransistor mit isolierter Gate-Elektrode ausgebildet. Wird ein n-Kanal-Bipolartransistor verwendet, ist ein Kollektor-Anschluss des Bipolartransistors dem Pluspol des Leistungshalbleiter-Bauteils zugeordnet und ein Emitter-Anschluss des Bipolartransistors ist dem Minuspol des Leistungshalbleiter-Bauteils zugeordnet. Wird alternativ ein p-Kanal-Bipolartransistor verwendet, ist der Emitter-Anschluss des Bipolartransistors dem Pluspol des Leistungshalbleiter-Bauteils zugeordnet und der Kollektor-Anschluss des Bipolartransistors ist dem Minuspol des Leistungshalbleiter-Bauteils zugeordnet. Besonders bevorzugt ist die Abschaltsteuervorrichtung eingerichtet, um die Halbleiter-Flussspannung, insbesondere eine Basis-Emitter-Spannung des Bipolartransistors, zu erfassen und daraus eine Stromstärke und/oder eine Spannung als den mindestens einen Ladeparameter zu ermitteln.

In einer Ausführungsform ist der erste Halbleiter-Schalter und/oder der zweite Halbleiter-Schalter ein Bipolartransistor mit isolierter Gate-Elektrode (englisch: Insulated-Gate Bipolar Transistor; IGBT). Insbesondere weist dieser einen Silizium-Werkstoff auf. Insbesondere ist es damit möglich, den Ladestrom derart schnell zu unterbrechen, dass ein bei der Fehlfunktion auftretender Kurzschlussstrom einen Wert von I = 1 kA nicht überschreitet.

In einer Ausgestaltung ist eine Kathode der Bauteil-Diode des Leistungshalbleiter-Bauteils dem Pluspol des Leistungshalbleiter-Bauteils zugeordnet und eine Anode der Bauteil-Diode des Leistungshalbleiter-Bauteils ist dem Minuspol des Leistungshalbleiter-Bauteils zugeordnet.

In einer besonders bevorzugten Ausgestaltung sind das erste des Leistungshalbleiter-Bauteil und das zweite des Leistungshalbleiter-Bauteil identisch ausgebildet.

In einer Ausgestaltung ist vorgesehen, dass die Abschaltsteuervorrichtung eingerichtet ist, um das erste Leistungshalbleiter-Bauteil und/oder das zweite Leistungshalbleiter-Bauteil mittels der Steuerspannung abzuschalten.

Insbesondere beträgt die Steuerspannung zum Abschalten des ersten Leistungshalbleiter-Bauteils und/oder des zweiten Leistungshalbleiter-Bauteils vorzugsweise höchstens 0 V. Insbesondere ist das erste Leistungshalbleiter-Bauteil abgeschaltet und somit der Ladestrom unterbrochen, wenn an dem ersten Leistungshalbleiter-Bauteil, insbesondere an einem Gate-Anschluss des ersten Leistungshalbleiter-Bauteils, eine Steuerspannung mit höchstens 0 V anliegt. Weiterhin ist das zweite Leistungshalbleiter-Bauteil abgeschaltet und somit der Ladestrom unterbrochen, wenn an dem zweiten Leistungshalbleiter-Bauteil, insbesondere an einem Gate-Anschluss des zweiten Leistungshalbleiter-Bauteils, eine Steuerspannung mit höchstens 0 V anliegt. Insbesondere sind das erste Leistungshalbleiter-Bauteil und das zweite Leistungshalbleiter-Bauteil eingeschaltet und somit der Ladestrom nicht unterbrochen, wenn an dem ersten Leistungshalbleiter-Bauteil und an dem zweiten Leistungshalbleiter-Bauteil, insbesondere an den jeweiligen Gate-Anschlüssen, jeweils eine Steuerspannung von 15 V bis 20 V anliegt.

In einer Ausführungsform ist die Abschaltanordnung, insbesondere das erste Leistungshalbleiter-Bauteil und das zweite Leistungshalbleiter-Bauteil, elektrisch in Reihe mit einer an die Leistungsversorgungsvorrichtung anschließbaren Energiespeichervorrichtung in einem Leistungsstromkreis der Leistungsversorgungsvorrichtung eingebaut.

Die Erfindung wird im Folgenden anhand der Zeichnung näher erläutert. Dabei zeigen:
- Figur 1: eine schematische Darstellung eines Ausführungsbeispiels einer Leistungsversorgungsvorrichtung,
- Figur 2: eine schematische Darstellung eines Prozessablaufdiagramms eines Verfahrens zum Betreiben der elektrischen Leistungsversorgungsvorrichtung 1 gemäß Figur 1,
- Figur 3: eine schematische Darstellung eines Ladestromstärkeverlauf eines störungsfreien Ladevorgangs,
- Figur 4: eine schematische Darstellung eines Ladestromstärkeverlaufs eines gestörten Ladevorgangs, wobei auf die Störung mittels direkten Erfassens des Ladeparametergradienten geschlossen wird und
- Figur 5: eine schematische Darstellung des Ladestromstärkeverlaufs gemäß Figur 4, wobei auf die Störung mittels indirekten Erfassens des Ladeparametergradienten geschlossen wird.

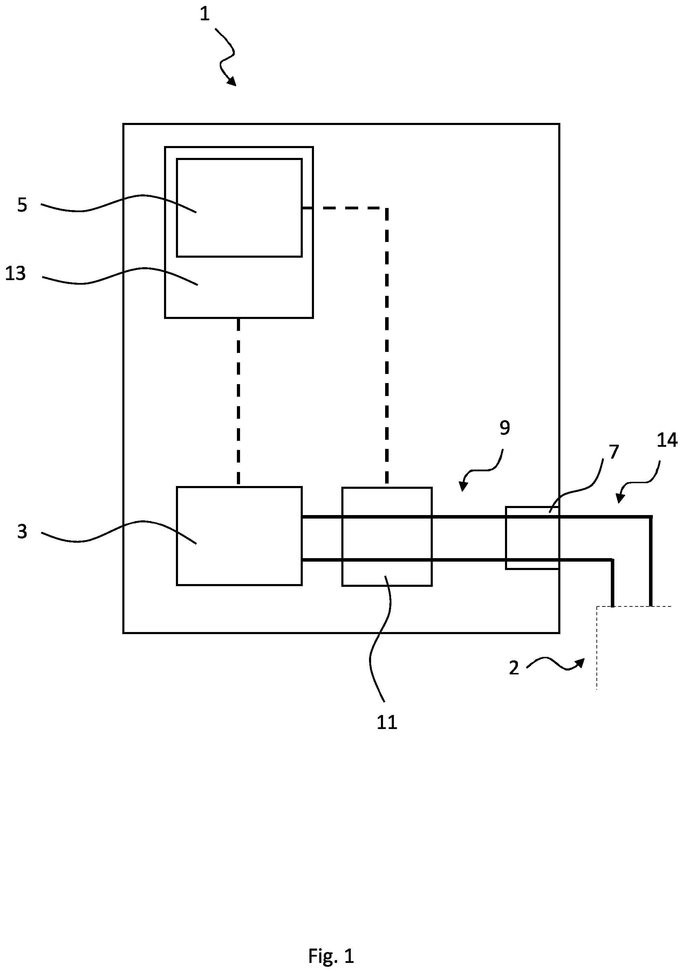

**Fig. 1** zeigt eine schematische Darstellung eines Ausführungsbeispiels einer Leistungsversorgungsvorrichtung 1 zum uni- oder bidirektionalen Laden einer Energiespeichervorrichtung 2, insbesondere eines Batteriespeichers eines Elektrofahrzeugs.

Die Leistungsversorgungsvorrichtung 1 umfasst eine Leistungselektronik 3, eine Abschaltsteuervorrichtung 5 und eine elektrische Schnittstelle 7. Die Leistungselektronik 3 ist eingerichtet, um einen Leistungsstromkreis 9 zum Laden der Energiespeichervorrichtung 2 wahlweise zu schließen oder zu öffnen. Die elektrische Schnittstelle 7 ist eingerichtet, um mit der Energiespeichervorrichtung 2 zum Laden der Energiespeichervorrichtung 2 verbunden zu werden. Vorliegend ist die elektrische Schnittstelle 7 mittels eines Ladekabels 14 mit der Energiespeichervorrichtung 2 verbunden.

Die Leistungsversorgungsvorrichtung 1 weist ferner eine Abschaltanordnung 11 auf. Die Abschaltsteuervorrichtung 5 ist eingerichtet, um mit dem Leistungsstromkreis 9 der Leistungsversorgungsvorrichtung 1 - vermittelt über die Abschaltanordnung 11 - wirkverbunden zu werden und um den Leistungsstromkreis 9 zu unterbrechen. Hierzu ist die Abschaltsteuervorrichtung 5 mit der Abschaltanordnung 11 steuerungswirkverbunden. Die Abschaltanordnung 11 ist wiederum eingerichtet, um ein Unterbrechungssignal der Abschaltsteuervorrichtung 5 zu empfangen und daraufhin den Leistungsstromkreis 9 zu unterbrechen.

Die Abschaltsteuervorrichtung 5 ist in eine Steuervorrichtung 13 der Leistungsversorgungsvorrichtung 1 integriert. In einem nicht dargestellten Ausführungsbeispiel ist die Abschaltsteuervorrichtung 5 als Steuervorrichtung 13 der Leistungsversorgungsvorrichtung 1 ausgebildet. In wieder einem anderen nicht dargestellten Ausführungsbeispiel ist die Abschaltsteuervorrichtung 5 separat und zusätzlich zu der Steuervorrichtung 13 der Leistungsversorgungsvorrichtung 1 vorgesehen und bevorzugt mit dieser wirkverbunden.

Die Leistungsversorgungsvorrichtung 1 und die Abschaltsteuervorrichtung 5 sind insbesondere eingerichtet zur Durchführung eines im Folgenden näher beschriebenen Verfahrens zum Betreiben der elektrischen Leistungsversorgungsvorrichtung 1.

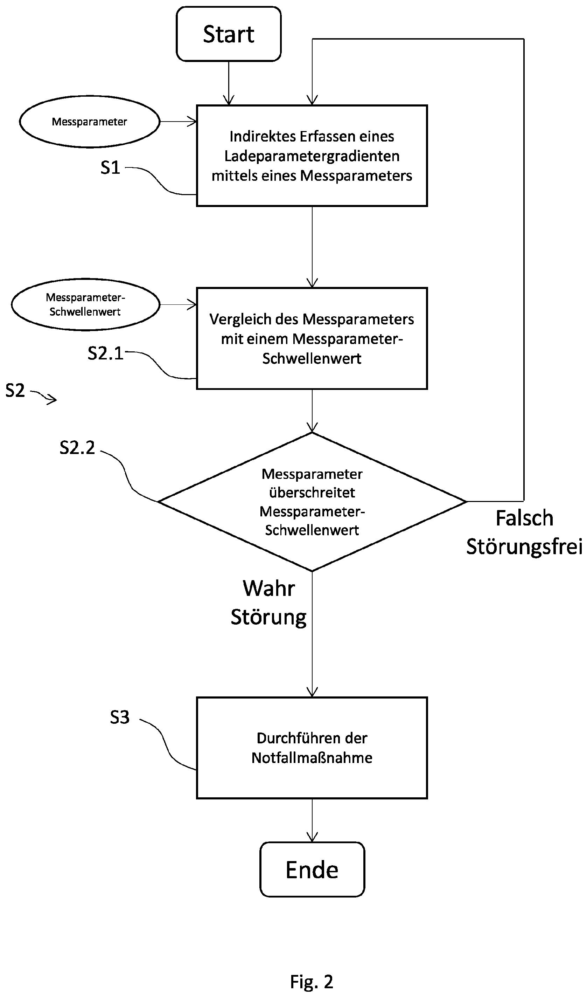

Fig. 2 zeigt eine schematische Darstellung eines Prozessablaufdiagramms eines ersten Ausführungsbeispiels eines Verfahrens zum Betreiben der elektrischen Leistungsversorgungsvorrichtung 1 gemäß Figur 1 zum uni- oder bidirektionalen Laden der Energiespeichervorrichtung 2.

Gleiche und funktionsgleiche Elemente sind in allen Figuren mit gleichen Bezugszeichen versehen, sodass insofern jeweils auf die vorangegangene Beschreibung verwiesen wird.

In dem Verfahren wird in einem ersten Schritt S1 während eines Ladevorgangs ein zeitlicher Ladeparametergradient eines für den Ladevorgang charakteristischen Ladeparameters erfasst.

Als der Ladeparameter wird mindestens eine Ladestromgröße verwendet, die ausgewählt ist aus einer Gruppe, bestehend aus: Einer Ladeleistung, einer Ladestromstärke, einer Ladespannung und einer Kombination aus mindestens zwei der genannten Ladestromgrößen. Dabei kann ein Ladestrom von der Leistungsversorgungsvorrichtung 1 zur Energiespeichervorrichtung 2, als auch umgekehrt, was als bidirektionales Laden bekannt ist, überwacht werden.

Der Ladeparametergradient kann dabei direkt oder indirekt erfasst werden: In einem in dieser Figur nicht dargestellten, zweiten Ausführungsbeispiel wird der Ladeparametergradient direkt erfasst. Wenn der Ladeparametergradient direkt erfasst wird, wird der Ladeparametergradient mit einem vorbestimmten Gradienten-Schwellenwert verglichen. Auf eine Störung des Ladevorgangs wird geschlossen, wenn der erfasste Ladeparametergradient den Gradienten-Schwellenwert überschreitet.

Vorliegend ist alternativ zum direkten Erfassen vorgesehen, dass der Ladeparametergradient indirekt erfasst wird, indem ein für den Ladeparametergradient charakteristischer Messparameter gemessen wird. Der Messparameter wird in einem ersten zweiten Schritt S2.1 eines zweiten Schritts S2 mit einem vorbestimmten Messparameter-Schwellenwert verglichen, wobei in einem zweiten zweiten Schritt S2.2 des zweiten Schritts S2 auf eine Störung des Ladevorgangs geschlossen wird, wenn der Messparameter den Messparameter-Schwellenwert überschreitet.

Als der Messparameter wird in diesem Ausführungsbeispiel eine aufgrund einer Induktivität, insbesondere von elektronischen Bauteilen der Leistungsversorgungsvorrichtung 1, insbesondere einer Abschaltsteuervorrichtung 5 der Leistungsversorgungsvorrichtung 1, über einer - von dem Ladestrom oder einem von dem Ladestrom abhängigen Teilstrom - durchflossenen Messstrecke abfallende Spannung erfasst. Die über der die Induktivität *L* aufweisenden Messstrecke abfallende Spannung *u(t)* ist unmittelbar abhängig von - insbesondere nach der Gleichung *u(t) = L-dI(t)*/*dt* proportional zu - dem zeitlichen Gradienten des Ladestroms oder Teilstroms *I(t)* und damit von dem Ladeparametergradient. In einer Ausführungsform wird als der Messparameter eine über einer von dem Ladestrom oder Teilstrom durchflossenen Spule abfallende Spannung erfasst. Alternativ weist die Messstrecke die Induktivität als eine parasitäre Induktivität auf. "Parasitär" bedeutet in diesem Zusammenhang insbesondere, dass ein Leitungsabschnitt oder mehrere unbestimmte, nicht klar umgrenzte Bauteile und/oder Leitungsabschnitte der Leistungsversorgungsvorrichtung 1 und/oder der Energiespeichervorrichtung 2 für die Induktivität ursächlich sind.

Der Ladeparametergradient und/oder der Messparameter wird an einer Leitung, dem Ladekabel 14, das die Leistungsversorgungsvorrichtung 1 mit der Energiespeichervorrichtung 2 verbindet, der Leistungselektronik 3, der elektrischen Schnittstelle 7 und/oder an der Steuervorrichtung 13 der Leistungsversorgungsvorrichtung 1 erfasst.

Mindestens ein Schwellenwert, ausgewählt aus dem Gradienten-Schwellenwert und dem Messparameter-Schwellenwert, wird abhängig von einem Grenz-Ladeparameter gesetzt, der ausgewählt ist aus einer Gruppe, bestehend aus: Einer zulässigen Leistungsgradientenobergrenze, einer zulässigen Leistungsobergrenze, einer zulässigen Stromstärkegradientenobergrenze, einer zulässigen Stromstärkeobergrenze, einer zulässigen Spannungsgradientenobergrenze, einer zulässigen Spannungsobergrenze und einer Kombination aus mindestens zwei der genannten Grenzwerte.

Wenn anhand des - vermittelt über den Messparameter indirekt - erfassten Ladeparametergradienten in dem zweiten Schritt S2 auf eine Störung des Ladevorgangs geschlossen wird, wird in einem dritten Schritt S3 eine Notfallmaßnahme durchgeführt, um die Leistungsversorgungsvorrichtung 1 und/oder die Energiespeichervorrichtung 2 vor einer Beschädigung zu schützen. Als Notfallmaßnahme wird der Leistungsstromkreis 9 der Leistungselektronik 3 unterbrochen, insbesondere so, dass der Ladevorgang unterbrochen wird.

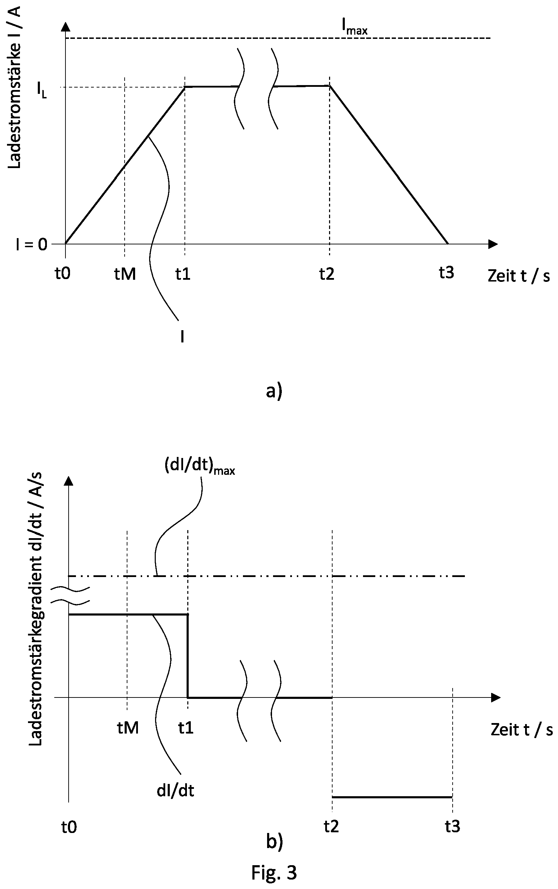

**Figur 3** zeigt eine schematische Darstellung eines Ladestromstärkeverlauf eines störungsfreien Ladevorgangs.

Während des hier beschriebenen Ladevorgangs wird ein zweites Ausführungsbeispiel eines Verfahrens zum Betreiben der elektrischen Leistungsversorgungsvorrichtung 1 gemäß Figur 1 durchgeführt.

Bei diesem zweiten Ausführungsbeispiel des Verfahrens wird - im Gegenzug zu dem ersten Ausführungsbeispiel des Verfahrens von Figur 2 - der Ladeparametergradient - hier der Ladestromstärkegradient - direkt erfasst. Wenn der Ladeparametergradient direkt erfasst wird, wird auf eine Störung des Ladevorgangs geschlossen, wenn der erfasste Ladeparametergradient einen vorbestimmten Gradienten-Schwellenwert überschreitet.

Das Diagramm a) zeigt einen Ladestromstärkenverlauf eines störungsfreien Ladevorgangs, bei dem die Leistungsversorgungsvorrichtung 1 von der Energiespeichervorrichtung 2 aufgeladen wird. Alternativ kann die Energiespeichervorrichtung 2 - vermittelt über die Leistungsversorgungsvorrichtung 1 - beispielsweise auch ein Stromnetz unterstützen oder stabilisieren.

In Diagramm a) ist eine Ladestromstärke I in Ampere (A) über der Zeit t in Sekunden (s) aufgetragen. Zu einem Start-Zeitpunkt t0 beginnt der Ladevorgang und die Ladestromstärke - als Ladeparameter - wird beginnend bei 0 A hier beispielhaft linear erhöht, bis bei einem ersten Zeitpunkt t1 eine vorbestimmte Ladestromstärke I_{L} erreicht ist. Zwischen den Zeitpunkten t0 und t1 ist der Ladestromstärkegradient dI/dt entsprechend konstant und weist einen positiven Wert auf (vgl. Diagramm b)). Es ist auch denkbar, dass die Ladestromstärke I nichtlinear, beispielsweise progressiv erhöht wird.

Das Diagramm b) zeigt eine erste Ableitung der Ladestromstärke des Diagramms a), nämlich den Ladestromstärkegradient dI/dt in A/s aufgetragen über die Zeit t in s. Der Ladestromstärkegradient bildet den zeitlichen Verlauf der Steigung der Ladestromstärke ab. Ebenfalls eingezeichnet ist der Gradienten-Schwellenwert (dI/dt)ₘₐₓ. Der Ladestromstärkegradient dI/dt ist bei einem störungsfreien Ladevorgang kleiner als der Gradienten-Schwellenwert (dI/dt)ₘₐₓ.

In Diagramm a) ist gezeigt, dass zwischen dem ersten Zeitpunkt t1 und einem zweiten Zeitpunkt t2 die Leistungsversorgungsvorrichtung 1 mit der konstanten Ladestromstärke I_{L} geladen wird; der Stromstärkegradient ist daher null (vgl. Diagramm b)). Ab dem zweiten Zeitpunkt t2 wird die Ladestromstärke I hier beispielhaft wiederum linear verringert, bis bei einem dritten Zeitpunkt t3 der Ladevorgang abgeschlossen ist. Zwischen den Zeitpunkten t2 und t3 ist der Ladestromstärkegradient dI/dt daher wiederum konstant und weist allerdings einen negativen Wert auf (vgl. Diagramm b)). Es ist auch hier denkbar, dass die Ladestromstärke I nichtlinear, beispielsweise regressiv verringert wird. Der Ladevorgang zwischen den Zeitpunkten t1 und t2 dauert üblicherweise deutlich länger - mehrere Minuten bis Stunden -, als das Erhöhen und Verringern der Ladestromstärke, welches üblicherweise wenige Sekunden bis zu einer Minute dauert.

Eingezeichnet ist ebenfalls die Stromstärkeobergrenze Iₘₐₓ, die oberhalb der konstanten Ladestromstärke I_{L} liegt. Die Stromstärkeobergrenze Iₘₐₓ ist vorliegend eine Stromstärkeobergrenze der Energiespeichervorrichtung 2. Wird diese überschritten, wird die Sicherung der Energiespeichervorrichtung 2 ausgelöst. Beispielsweise wäre dann ein Elektrofahrzeug nicht mehr fahrtüchtig.

Bei dem vorliegend betrachteten Messzeitpunkt tM - sowie auch bei allen anderen Zeitpunkten dieses Ladevorgangs - ist der Ladestromstärkegradient dI/dt kleiner als der Gradienten-Schwellenwert (dI/dt)ₘₐₓ. Solange der Ladestromstärkegradient dI/dt kleiner ist als der Gradienten-Schwellenwert (dI/dt)ₘₐₓ, wird nicht auf eine Störung des Ladevorgangs geschlossen, insbesondere verläuft der Ladevorgang störungsfrei - vorausgesetzt, es liegen keine anderen Störungen vor -. Der Ladestromstärkegradient dI/dt bei einem störungsfreien Ladevorgang liegt vorzugsweise von 20 A/s bis 100 A/s. Der Gradienten-Schwellenwert (dI/dt)ₘₐₓ liegt vorzugsweise knapp oberhalb von 1,0 A/µs, vorzugsweise beträgt der Gradienten-Schwellenwert (dI/dt)ₘₐₓ 1,3 A/µs.

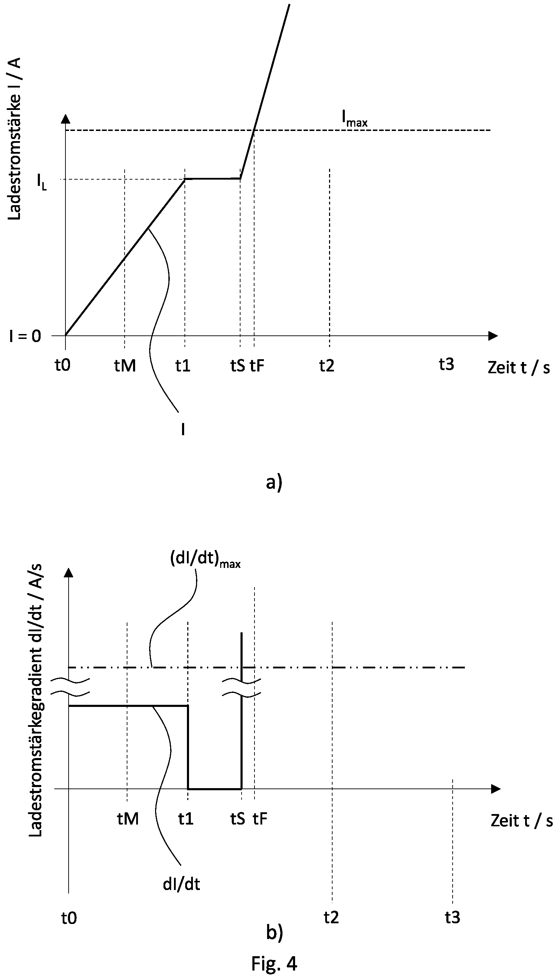

**Figur 4** zeigt eine schematische Darstellung eines Ladestromstärkeverlaufs eines gestörten Ladevorgangs, wobei auf die Störung mittels direkten Erfassens des Ladeparametergradienten geschlossen wird. Als Ladeparametergradient wird der Ladestromstärkegradient dI/dt erfasst.

Die in Figur 4 dargestellten Diagramme a) und b) zeigen den Ladevorgang von Figur 3, wobei ebenfalls das zweite Ausführungsbeispiel des Verfahrens zum Betreiben der elektrischen Leistungsversorgungsvorrichtung 1 gemäß Figur 1 durchgeführt wird.

Die zwei Diagramme von Figur 4 entsprechen den zwei Diagrammen von Figur 3, mit dem Unterschied, dass der Ladevorgang hier nicht störungsfrei abläuft. Zu einem Störungszeitpunkt tS wird die Leistungsversorgungsvorrichtung 1 aufgrund eines Fehlers kurzgeschlossen. Die Ladestromstärke I steigt daraufhin steil an. Messungen haben ergeben, dass der Ladestromstärkegradient dI/dt bei einem Kurzschluss größer ist als 1,5 A/µs und somit deutlich oberhalb des Ladestromstärkegradient dI/dt bei einem störungsfreien Ladevorgang liegt, der vorzugsweise von 20 A/s bis 100 A/s beträgt.

Bei Verwendung einer Leistungsversorgungsvorrichtung 1 des Stands der Technik würde die Störung dazu führen, dass die Ladestromstärke I so lange und so weit ansteigen kann, dass bei einem Fehlerzeitpunkt tF die Stromstärkeobergrenze Iₘₐₓ der Sicherung der Energiespeichervorrichtung 2 überschritten wird. Handelt es sich bei der Energiespeichervorrichtung 2 um eine Batterie eines Elektrofahrzeugs, wäre das Elektrofahrzeug ab dem Fehlerzeitpunkt tF nicht mehr funktionsfähig.

Bei Durchführung des vorliegenden Verfahrens kann dies verhindert werden. In Diagramm b) ist zu erkennen, dass der Ladestromstärkegradient dI/dt zwischen den Zeitpunkten t0 und t1 - ebenso wie in Figur 3 - zunächst kleiner ist als der Gradienten-Schwellenwert (dI/dt)ₘₐₓ. Ab dem ersten Zeitpunkt t1 beträgt der Ladestromstärkegradient dI/dt zunächst null, weil die Leistungsversorgungsvorrichtung 1 mit einer konstanten Ladestromstärke I_{L} geladen wird.

Zu dem Störungszeitpunkt tS steigt der Ladestromstärkegradient dI/dt sprunghaft und nahezu vertikal an und überschreitet üblicherweise innerhalb von wenigen Mikrosekunden den Gradienten-Schwellenwert (dI/dt)ₘₐₓ deutlich, womit auf eine Störung des Ladevorgangs geschlossen wird. Dabei wird die Notfallmaßnahme durchgeführt, indem der Leistungsstromkreis 9 der Leistungselektronik 3 der Leistungsversorgungsvorrichtung 1 unterbrochen wird. Der Leistungsstromkreis 9 der Leistungselektronik 3 wird dabei zeitlich derart schnell unterbrochen, dass die Sicherung der Energiespeichervorrichtung 2 der Störung des Ladevorgangs gar nicht ausgesetzt wird, insbesondere die Sicherung also nicht ausgelöst wird. Handelt es sich bei der Energiespeichervorrichtung 2 um eine Batterie eines Elektrofahrzeugs, wäre das Elektrofahrzeug weiterhin funktionsfähig.

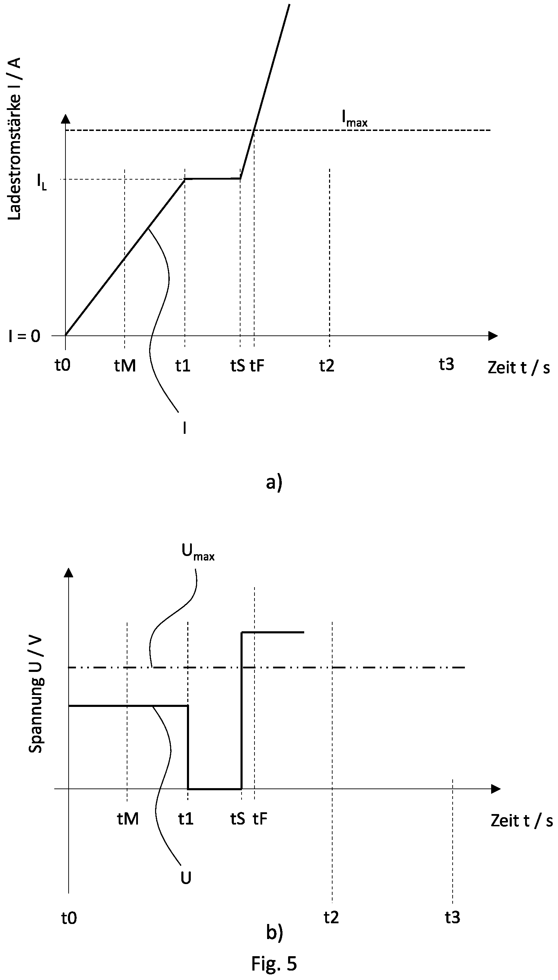

**Figur 5** zeigt eine schematische Darstellung des Ladestromstärkeverlaufs gemäß Figur 4, wobei auf die Störung mittels indirekten Erfassens des Ladeparametergradienten geschlossen wird.

Im Gegenzug zu dem in den Figuren 3 und 4 durchgeführten zweiten Ausführungsbeispiel des Verfahrens - bei denen der Ladeparametergradient direkt erfasst wird - wird in Figur 5 das in Figur 2 erwähnte erste Ausführungsbeispiel des Verfahrens durchgeführt, bei dem der Ladeparametergradient indirekt erfasst wird. Der Ladeparametergradient - also der Ladestromstärkegradient dI/dt - wird indirekt erfasst, indem ein für den Ladeparametergradient charakteristischer Messparameter gemessen wird. Der Messparameter wird mit einem Messparameter-Schwellenwert verglichen, wobei auf eine Störung des Ladevorgangs geschlossen wird, wenn der Messparameter den Messparameter-Schwellenwert überschreitet.

Als der Messparameter wird hier die aufgrund einer Induktivität abfallende Spannung U in Volt (V) erfasst. Als Messparameter-Schwellenwert wird eine Spannungsobergrenze Uₘₐₓ in Volt (V) verwendet.

Das Diagramm a) von Figur 5 ist identisch zu Diagramm a) von Figur 4. Auch hier kommt es zu dem Störungszeitpunkt tS zu einem Kurzschluss in der Leistungsversorgungsvorrichtung 1 und die Ladestromstärke I steigt steil an.

Das Diagramm b) zeigt einen zeitlichen Verlauf der abfallenden Spannung U in Volt (V) über der Zeit t in s. Es ist zu erkennen, dass die abfallende Spannung U zwischen den Zeitpunkten t0 und t1 zunächst kleiner ist als der Messparameter-Schwellenwert Uₘₐₓ. Ab dem Zeitpunkt t1 beträgt die abfallende Spannung U zunächst null, weil die Leistungsversorgungsvorrichtung 1 mit einer konstanten Ladestromstärke I geladen wird und die induzierte Spannung U bei einem Ladestromstärkegradienten dI/dt von null ebenfalls null beträgt.

Zu dem Störungszeitpunkt tS steigt die abfallende Spannung U sprunghaft und nahezu vertikal an und überschreitet üblicherweise innerhalb von wenigen Mikrosekunden den Messparameter-Schwellenwert Uₘₐₓ, womit auf eine Störung des Ladevorgangs geschlossen wird. Dabei wird ebenfalls wie in Figur 4 die Notfallmaßnahme durchgeführt, indem der Leistungsstromkreis 9 der Leistungselektronik 3 der Leistungsversorgungsvorrichtung 1 unterbrochen wird. Der Leistungsstromkreis 9 der Leistungselektronik 3 kann auch bei dem indirekten Erfassen zeitlich derart schnell unterbrochen werden, dass die Sicherung der Energiespeichervorrichtung 2 der Störung des Ladevorgangs gar nicht ausgesetzt wird, insbesondere die Sicherung also nicht ausgelöst wird. Handelt es sich bei der Energiespeichervorrichtung 2 um eine Batterie eines Elektrofahrzeugs, wäre das Elektrofahrzeug ebenfalls weiterhin funktionsfähig.

## Patentansprüche

1. Verfahren zum Betreiben einer elektrischen Leistungsversorgungsvorrichtung (1) zum uni - oder bidirektionalen Laden einer Energiespeichervorrichtung (2), wobei
- während eines Ladevorgangs ein zeitlicher Ladeparametergradient eines für den Ladevorgang charakteristischen Ladeparameters erfasst wird, wobei,
- wenn anhand des erfassten Ladeparametergradienten auf eine Störung des Ladevorgangs geschlossen wird, eine Notfallmaßnahme durchgeführt wird, um die Leistungsversorgungsvorrichtung (1) und/oder die Energiespeichervorrichtung (2) vor einer Beschädigung zu schützen.

2. Verfahren nach Anspruch (1), wobei der Ladeparametergradient
- direkt erfasst wird, wobei der Ladeparametergradient mit einem vorbestimmten Gradienten-Schwellenwert verglichen wird, wobei auf eine Störung des Ladevorgangs geschlossen wird, wenn der erfasste Ladeparametergradient den vorbestimmten Gradienten-Schwellenwert überschreitet, oder
- indirekt erfasst wird, indem ein für den Ladeparametergradient charakteristischer Messparameter gemessen wird, und wobei der Messparameter mit einem vorbestimmten Messparameter-Schwellenwert verglichen wird, wobei auf eine Störung des Ladevorgangs geschlossen wird, wenn der Messparameter den vorbestimmten Messparameter-Schwellenwert überschreitet.

3. Verfahren nach einem der vorhergehenden Ansprüche, wobei als Notfallmaßnahme ein Leistungsstromkreis (9) einer Leistungselektronik (3), insbesondere der Leistungsversorgungsvorrichtung (1) oder der Energiespeichervorrichtung (2), unterbrochen wird.

4. Verfahren nach einem der vorhergehenden Ansprüche, wobei als der Ladeparameter mindestens eine Ladestromgröße verwendet wird, die ausgewählt ist aus einer Gruppe, bestehend aus: Einer Ladeleistung, einer Ladestromstärke, einer Ladespannung und einer Kombination aus mindestens zwei der genannten Parameter, wobei optional als Messparameter eine aufgrund einer Induktivität über einer Messstrecke abfallende Spannung erfasst wird.

5. Verfahren nach einem der vorhergehenden Ansprüche, wobei mindestens ein Schwellenwert, ausgewählt aus dem Gradienten-Schwellenwert und dem Messparameter-Schwellenwert, abhängig von einem Grenz-Ladeparameter gesetzt wird, der ausgewählt ist aus einer Gruppe, bestehend aus: Einer zulässigen Leistungsgradientenobergrenze, einer zulässigen Leistungsoberbrenze, einer zulässigen Stromstärkegradientenobergrenze, einer zulässigen Stromstärkeobergrenze, einer zulässigen Spannungsgradientenobergrenze, einer zulässigen Spannungsobergrenze und einer Kombination aus mindestens zwei der genannten Grenzwerte.

6. Verfahren nach einem der vorhergehenden Ansprüche, wobei
- der Ladeparametergradient und/oder der Messparameter an einer Leitung, einem Ladekabel (14), das die Leistungsversorgungsvorrichtung (1) mit der Energiespeichervorrichtung (2) verbindet, einer Leistungselektronik (3), einer elektrischen Schnittstelle (7) und/oder an einer Steuervorrichtung (13) der Leistungsversorgungsvorrichtung (1) erfasst wird.

7. Abschaltsteuervorrichtung (5) für eine Leistungsversorgungsvorrichtung (1) zum uni- oder bidirektionalen Laden einer Energiespeichervorrichtung (2), wobei die Abschaltsteuervorrichtung (5) eingerichtet ist, um ein Verfahren nach einem der vorhergehenden Ansprüche durchzuführen.

8. Abschaltsteuervorrichtung (5) nach Anspruch 7, wobei
- die Abschaltsteuervorrichtung (5) eingerichtet ist, um mit einem Leistungsstromkreis (9) der Leistungsversorgungsvorrichtung (1) wirkverbunden zu werden und um den Leistungsstromkreis (9) zu unterbrechen.

9. Abschaltsteuervorrichtung (5) nach Anspruch 7 oder 8, wobei
- die Abschaltsteuervorrichtung (5) durch eine Steuervorrichtung (13) der Leistungsversorgungsvorrichtung (1) gebildet ist.

10. Leistungsversorgungsvorrichtung (1) zum uni- oder bidirektionalen Laden einer Energiespeichervorrichtung (2), umfassend:
- eine Leistungselektronik (3), die eingerichtet ist, um einen Leistungsstromkreis (9) zum Laden der Energiespeichervorrichtung (2) wahlweise zu schließen oder zu öffnen;
- eine Abschaltsteuervorrichtung (5) nach einem der Ansprüche 7 bis 9, und
- eine elektrische Schnittstelle (7), die eingerichtet ist, um mit der Energiespeichervorrichtung (2) zum Laden der Energiespeichervorrichtung (2) verbunden zu werden.

11. Leistungsversorgungsvorrichtung (1) nach Anspruch 10, wobei
- die Abschaltsteuervorrichtung (5) in eine Steuervorrichtung (13) der Leistungsversorgungsvorrichtung (1) integriert ist oder als Steuervorrichtung (13) der Leistungsversorgungsvorrichtung (1) ausgebildet ist.
